# EUROPEAN PATENT APPLICATION

(11) **EP 4 607 490 A1**
(43) Date of publication of application: **27.08.2025**
(21) Application number: 25158570.9
(22) Date of filing: 18.02.2025
(51) Int. Cl.: G08G 1/0967, B60W 30/18, B60W 50/00, B60W 50/14

(54) **VEHICLE SIGNAL CATALOG**

(30) Priority: 23.02.2024 US 202463557034 P; 22.11.2024 US 202418956130
(71) Applicant: BlackBerry Limited, Waterloo, Ontario N2K 0A7 (CA)
(72) Inventor: SPERANZA, Roberto, Waterloo, N2K 0A7 (CA)
(74) Representative: MERH-IP Matias Erny Reichl Hoffmann Patentanwälte PartG mbB

(57) **Abstract**

A signal catalog defines one or more vehicle signals selected from among a vehicle signal relating to a speed limit, a vehicle signal relating to a trip time, or a vehicle signal relating to regenerative braking of a vehicle. A processing resource processes the one or more vehicle signals to generate an indication relating to an operation of the vehicle.

## Description

### Cross-Reference to Related Application

This application claims the benefit under 35 U.S.C. § 119(e) of U.S. Provisional Application No. 63/557,034, entitled "Vehicle Signal Catalog," filed February 23, 2024 (Attorney Docket No. 51181-US-PRV), which is hereby incorporated by reference in its entirety.

### Background

A vehicle can include various electronic components that are able to perform respective tasks. Examples of electronic components include controllers and sensors. Programs can also execute in the vehicle. Examples of programs include synthetic sensors, application programs, and other types of programs.

### Brief Description of the Drawings

Some implementations of the present disclosure are described with respect to the following figures.
FIG. 1 is a block diagram of an example arrangement that includes a vehicle according to some implementations of the present disclosure.
FIG. 2 is a block diagram of producing a custom signal catalog according to some implementations of the present disclosure.
FIG. 3 is a block diagram of a custom signal catalog according to some implementations of the present disclosure.
FIG. 4 is a flow diagram of a process according to some implementations of the present disclosure.
FIG. 5 is a block diagram of a system according to some implementations of the present disclosure.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

Vehicle signals used for communications in a vehicle can be according to a signaling protocol, such as the Vehicle Signal Specification (VSS) from the COnnected VEhicle Systems Alliance (COVESA). VSS provides a signal catalog (referred to as a "VSS catalog") that represents various features of vehicles, including components, actuators, sensors, and attributes. The VSS catalog is a hierarchical representation that includes nodes (arranged in a hierarchical form) representing respective features of vehicles. For example, the nodes of the VSS catalog can include a branch node, an actuator node, a sensor node, and an attribute node. A branch node represents a group of nodes, an actuator node represents read and write signals (such as read and write signals obtained from or sent to an actuator of a vehicle), a sensor node represents a read-only signal (such as a signal obtained from a sensor), and an attribute node represents an attribute whose value typically is not changed more than once per ignition cycle.

Although reference is made to VSS in some examples, it is noted that techniques or mechanisms according to some implementations can be applied with other types of signal catalogs for vehicles.

A VSS catalog may not define certain vehicle signals that may be useful for operations associated with a vehicle. Note that different vehicle models from one or more vehicle manufacturers may include different sets of vehicle features. As new vehicle features are introduced in newly developed vehicles, the collection of vehicle signals defined by a VSS catalog may be inadequate to support or use such new vehicle features.

Some examples of vehicle signals that may be missing from a VSS catalog include vehicle signals related to a vehicle speed limit, a vehicle trip time, or vehicle regenerative braking. In some examples, such vehicle signals (along with other vehicle signals) may be used by a machine learning model to predict a range of an electric vehicle or to provide a vehicle speed recommendation. A "machine learning model" can refer to a model that is updated based on training of the model and/or based on prior predictions produced by the model. The update of the model is part of how the model learns from training or past operations.

In accordance with some implementations of the present disclosure, a custom signal catalog is defined that includes additional vehicle signals not present in an initial signal catalog. The initial signal catalog can refer to a signal catalog that conforms to a version of a signaling protocol, such as the VSS protocol. The additional vehicle signals can be added using one or more separate update data structures, such as overlay files according to the VSS protocol. The overlay files allow new vehicle signals to be added without changing the data structure(s), such as file(s), of the initial signal catalog. In some examples of the present disclosure, the additional vehicle signals can include any or some combination of the following: a vehicle signal relating to a speed limit, a vehicle signal relating to a trip time, or a vehicle signal relating to regenerative braking.

Techniques or mechanisms according to some examples that make use of the custom signal catalog can improve the relevant technology of operating vehicles. For example, vehicle operation is improved by controlling a speed of a vehicle, applying a level of regenerative braking to control the speed of the vehicle or to charge a vehicle battery, or to improve other operational aspects of the vehicle.

Note that although the additional vehicle signals may not be defined by a given version of a signaling protocol, such as the VSS protocol, one or more of the additional vehicle signals may be added to a later version of the signaling protocol.

Examples of vehicles include motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., space planes, space shuttles, space capsules, space stations, satellites, rockets, etc.), watercraft (e.g., ships, boats, hovercraft, submarines, etc.), railed vehicles (e.g., trains and trams, etc.), or other types of vehicles including any combinations of any of the foregoing, whether currently existing or after arising.

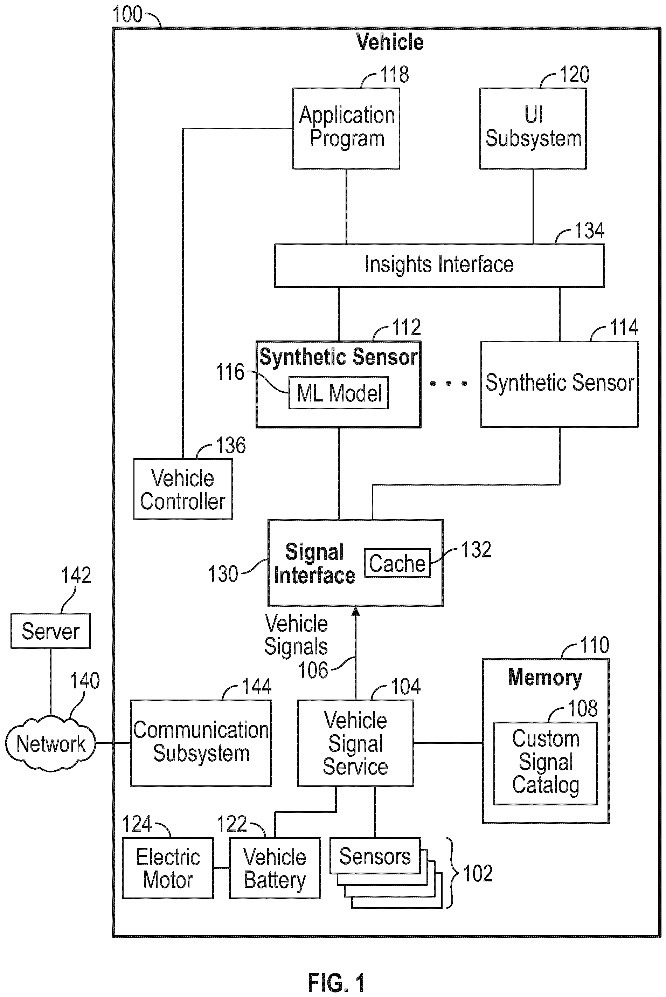

FIG. 1 is a block diagram of an example vehicle 100 that includes various components. The vehicle 100 includes sensors 102, which can include hardware sensors or software sensors, or both hardware and software sensors. Examples of hardware sensors include temperature sensors, pressure sensors, humidity sensors, speed sensors, acceleration sensors, a time clock, or other types of physical sensors. Examples of software sensors include monitoring agents that can monitor data of a subsystem in the vehicle, such as a monitoring agent in a navigation system; a monitoring agent in a driver assistance system, such as an advanced driver assistance system (ADAS); a monitoring agent in a vehicle controller; or any other type of software sensor.

A sensor (a hardware sensor or a software sensor) is able to acquire measurement data that includes values of one or more metrics. Some of the sensors 102 may be coupled to one or more buses in the vehicle (not shown). An example of a bus in a vehicle includes a controller area network (CAN) bus. In other examples, other types of communication links can be employed. Communication links can include physical links, including wired or wireless links. Communication links can also include inter-process links over which programs can communicate with one another.

Measurement data from the sensors 102 are provided to a vehicle signal service 104, which includes machine-readable instructions to derive vehicle signals 106 based on the measurement data from the sensors 102. Note that there may be one or more additional components between the sensors 102 and the vehicle signal service 104. The vehicle signals 106 derived by the vehicle signal service 104 are defined by a custom signal catalog 108 stored in a memory 110 of the vehicle 100. In some examples, the vehicle signal service 104 may include signal handlers that can operate on incoming measurement data from the sensors 102 to apply transformations or other operations on the measurement data from the sensors 102 to produce the vehicle signals 106.

The vehicle signals 106 may be provided to a signal interface 130 that includes a cache memory 132 to store the vehicle signals 106. Note that the signal interface 130 may be implemented with hardware or software, and the cache memory 132 may be a hardware cache memory or a software cache memory.

The vehicle signals 106 stored in the cache memory 132 are accessible by synthetic sensors 112 and 114 that execute in the vehicle 100. A synthetic sensor is implemented as a program (including machine-readable instructions). The synthetic sensor is able to apply computations on vehicle signals 106 to produce outputs. The synthetic sensors 112 and 114 may operate on respective different subsets of vehicle signals 106. Although two synthetic sensors are depicted in FIG. 1, in other examples, a different quantity (one or more) of synthetic sensors can be employed.

In some examples of the present disclosure, the synthetic sensor 112 is a vehicle range and speed management synthetic sensor that is able to determine an expected range of the vehicle 100 and provide a speed recommendation for the vehicle 100. For example, the vehicle 100 is an electric vehicle that includes a vehicle battery 122 that provides energy to an electric motor 124 of the vehicle 100. As the vehicle 100 is operated, the charge in the vehicle battery 122 is continually depleted. The amount of charge left in the vehicle battery 122 determines the remaining range of the vehicle 100. The vehicle range and speed management synthetic sensor 112 includes a machine learning model 116 that receives various inputs and makes a prediction based on the inputs. Some inputs to the machine learning model 116 include a speed limit vehicle signal (that represents a speed limit for the vehicle 100), a trip time vehicle signal (that represents a time elapsed since the beginning of a current trip of the vehicle 100), and a regenerative braking vehicle signal (that represents a feature associated with regenerative braking of the vehicle 100). Regenerative braking refers to the use of the electric motor 124 (rather than vehicle brakes) to slow down the vehicle 100. Regenerative braking when activated charges the vehicle battery 122.

Another input to the machine learning model 116 is a vehicle signal representing a remaining battery charge of the vehicle battery 122. The vehicle battery 122 may include a sensor (not show) that indicates the remaining battery charge. The remaining battery charge data from the vehicle battery sensor is provided to the vehicle signal service 104, which outputs a vehicle signal 106 representing the remaining battery charge. The vehicle signal 106 representing the remaining battery charge is a vehicle signal defined by the custom signal catalog 108.

The machine learning model 116 can receive further inputs to perform its prediction.

An output of the vehicle range and speed management synthetic sensor 112 can be provided to an insights interface 134. The insights interface 134 can provide insights based on outputs of the synthetic sensors 112 and 114 to other modules in the vehicle 100. An "insight" can include data derived by processing vehicle signals, such as by the synthetic sensors 112 and 114. The insights interface 134 may relay insights from the synthetic sensors 112 and 114 to other modules, including an application program 118 and a user interface (UI) subsystem 120. In some examples, the insights interface 134 can apply a further computation based on an output of a synthetic sensor to produce an insight.

The UI subsystem 120 can present a UI in a display device of the vehicle 100. The presented UI can include information relating to insights derived from an output of the vehicle range and speed management synthetic sensor 112. For example, the information in the UI can include information pertaining to the remaining range of the vehicle 100 and a speed recommendation at which the vehicle 100 should be driven for optimal usage of the vehicle battery 122. The driver of the vehicle 100 can choose to accept or disregard the recommended speed displayed in the UI by the UI subsystem 120.

The application program 118 can be a control program of the vehicle 100 that can control an operation of the vehicle 100. For example, the application program 118 may be part of an autonomous driving system of the vehicle 100 that can control various operational aspects of the vehicle 100, including the speed of the vehicle 100, and other operational aspects of the vehicle 100. In some examples, the application program 118 can receive insights including the remaining range and the speed recommendation based on the output of the vehicle range and speed management synthetic sensor 112. The application program 118 can interact with a vehicle controller 136 of the vehicle 100 to control a speed of the vehicle 100 based on the remaining range and the speed recommendation. For example, if the driver of the vehicle 100 has turned on an autopilot feature or an adaptive cruise control feature of the vehicle 100, the application program 118 can cause the vehicle 100 to adjust the vehicle's speed based on the recommended speed from the vehicle range and speed management synthetic sensor 112.

The vehicle 100 is also able to communicate over a network 140 with a remote server 142. For example, the vehicle 100 can include a communication subsystem 144 that includes a signal transceiver and protocol layers to communicate over the network 140. The server 142 can be part of a cloud computing environment, a data center, or any other type of computing environment.

Although FIG. 1 shows an example in which synthetic sensors in the vehicle 100 consume the vehicle signals 106, in other examples, other types of programs in the vehicle can consume the vehicle signals 106. In further examples, an external entity, such as a program in the server 142, can consume the vehicle signals 106. The vehicle signals 106 may be communicated over the network 140 to the server 142.

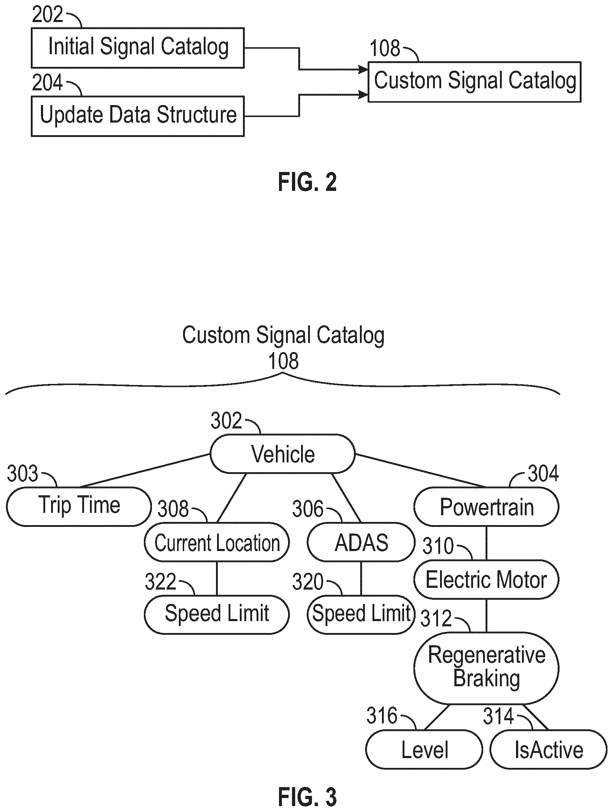

As shown in FIG. 2, the custom signal catalog 108 is derived based on an initial signal catalog 202 and an update data structure 204 (or multiple update data structures). The initial signal catalog 202 may conform to a given version of a signaling protocol, such as the VSS protocol. The update data structure(s) 204 when applied to the initial signal catalog 202 adds additional vehicle signals that are not defined by the initial signal catalog 202. An update data structure 204 may be an overlay structure, such as an overlay file according to the VSS protocol. The update data structure(s) 204 and the initial signal catalog 202 can be combined to produce the custom signal catalog 108. The combining of the initial signal catalog 202 and one or more update data structures 204 may be performed by an entity that is outside the vehicle 100. The external entity (e.g., the server 142) can produce the custom signal catalog 108 and transmit the custom signal catalog 108 to the vehicle 100 (such as over the network 140) for storage in the memory 110. In other examples, an entity (e.g., a program or a hardware processing resource) inside the vehicle 100 can combine the initial signal catalog 202 and the one or more update data structures 204 to produce the custom signal catalog 108.

As used here, a "processing resource" can refer to one or more hardware processors. A hardware processor can include a microprocessor, a core of a multicore microprocessor, a microcontroller, a programmable integrated circuit, a programmable gate array, or another hardware processing circuit.

In examples where the initial signal catalog 202 is a VSS catalog, the VSS catalog can be implemented with one or more specification files. A specification file of a VSS catalog is referred to as a "VSPEC file." A VSPEC file is according to the YAML Ain't Markup Language (YAML), for example.

Making changes to source material (one or more VSPEC files) of a VSS catalog may trigger a requirement in the Mozilla Public License Version 1 (MPL V1) for distributing modified source material to others. This may not be desirable under certain circumstances.

Instead of making changes to the source material of a VSS catalog, the VSS also provides an overlay mechanism that allows changes or additions to be made with respect to the VSS catalog, without changing the source material of the VSS catalog. The overlay mechanism supports the creation of one or more overlay files (which themselves are VSPEC files) that contain instructions specifying changes to nodes of a VSS catalog, or specifying additions of nodes that are not present in the VSS catalog. An overlay file can be used to specify the addition of new nodes that represent new vehicle signals.

A converter (e.g., inside the server 142 or inside the vehicle 100) can combine the VSS catalog with one or more overlay files to produce an output representation (e.g., the custom signal catalog 108) in a different format, such as any of the following: a JavaScript Object Notation (JSON) format, Interface Definition Language (IDL) format, or any other format. The converter can be a VSS tool that is provided as one of the tools associated with the VSS.

FIG. 3 shows an example of the custom signal catalog 108, which includes a hierarchical arrangement of nodes representing respective features of the vehicle 100. A root node 302 represents the vehicle 100. Various nodes can depend from the root node 302 in the hierarchical arrangement of nodes. A first node "depends" from a second node in the hierarchical arrangement of nodes if the first node is connected to the second node and is at a lower hierarchical level in the hierarchical arrangement than the second node. The root node 302 is at the highest hierarchical level in the hierarchical arrangement.

Nodes depending from the root node 302 include branch nodes 304, 306, 308, and a sensor node 303. The sensor node 303 represents a signal ("trip time vehicle signal") from a sensor to measure a trip time of the vehicle 100. An example trip time vehicle signal can have the following form: Vehicle.TripTime. The trip time vehicle signal can indicate a time elapsed since the beginning of a current trip of the vehicle 100.

The branch node 304 represents a powertrain of the vehicle 100. Further nodes depend from the powertrain branch node 304, including a branch node 310 that represents an electric motor. A branch node 312 depends from the electric motor branch node 310. The branch node 312 represents a regenerative braking feature of the vehicle 100. Nodes that depend from the regenerative braking branch node 312 include a sensor node 314 that represents whether the regenerative braking feature is active (IsActive). The IsActive sensor node 314 if set to a first value (e.g., "0" or false) indicates that the regenerative braking feature is disabled, and if set to a different second value (e.g., "1" or true) indicates that the regenerative braking feature is enabled. The IsActive sensor node 314 can be expressed as the following example vehicle signal:
Vehicle.PowerTrain.ElectricMotor.RegenerativeBraking.IsActive. In some cases, the node 314 can be an actuator or attribute node.

Another node that depends from the regenerative braking branch node 312 is a sensor node 316 that represents a regenerative braking level to be applied. The regenerative braking level sensor node 316 can be expressed as the following example vehicle signal:
Vehicle. Powertrain. ElectricMotor. RegenerativeBraking. Level, which can have several discrete values, such as OFF, LOW, NORMAL, and STRONG. If set to OFF, that indicates that no regenerative braking is used. However, the regenerative braking can have a low level, normal level, or strong level, which can be indicated using the LOW, NORMAL, and STRONG values assigned to
Vehicle.Powertrain.ElectricMotor.RegenerativeBraking.Level. In some cases, the node 316 can be an actuator or attribute node.

The branch node 306 represents an advanced driver assistance system (ADAS), which can assist the driver in operating the vehicle 100 safely. A sensor node 320 depends from the branch node 306. The sensor node 320 represents a speed limit derived by the ADAS. For example, the ADAS may derive a speed limit for a current roadway traveled by the vehicle 100 based on reading road signs that are on the side of the roadway. A camera of the vehicle 100 can capture images of a road sign, and the ADAS is able to derive a speed limit based on an image analysis of the captured images of the road sign. The ADAS speed limit sensor node 320 can be expressed as the following example vehicle signal:
Vehicle.ADAS.SpeedLimit.

The branch node 308 represents a current location determination system of the vehicle 100. An example of the current location determination system is a navigation system, which can be based on Global Positioning System (GPS) coordinates obtained by a GPS receiver of the vehicle 100. A sensor node 322 depends from the branch node 308. The sensor node 322 represents a speed limit derived by the current location determination system. For example, the current location determination system can determine a current location of the vehicle 100, and based on the current location, the current location determination system can access a speed limit repository to retrieve a speed limit applicable to the current location of the vehicle 100. The current location speed limit sensor node 322 can be expressed as the following example vehicle signal:
Vehicle. CurrentLocation.SpeedLimit.

The recommended speed can be based on the values of the ADAS speed limit node 320 and the current location speed limit node 322. In one example, the recommended speed is the smaller value of the nodes 320 and 322. In another example, if the quality of the road sign image is below a threshold or if the confidence score of the speed limit estimation from the image analysis is below a threshold, the ADAS speed limit node 320 may not have a value, and the recommended speed is based on the value of the current location speed limit node 322. In some other examples, the recommended speed is the value of the node 320 or 322 multiplied by a factor, and the factor is based on the environment around the vehicle. The factor can be one for a good road condition and daytime and be a value less than one for a bad road condition (e.g., flooded/icy road or bumpy road), nighttime, or when there is an emergency siren sound around. The factor may be determined by a machine learning model. For example, based on the images captured by a camera or the sound captured by a microphone, the machine learning model can analyze the images or the sound, determine how bad the road condition is or whether there is a siren sound, and choose a value for the factor. In some cases, the factor can depend on the vehicle load. If the vehicle is heavily loaded, the factor can be a value less than one.

Although the foregoing refers to examples of various vehicle signals and nodes of the custom signal catalog 108 representing the vehicle signals, in other examples, the vehicle signals can have different forms and may be represented using different nodes.

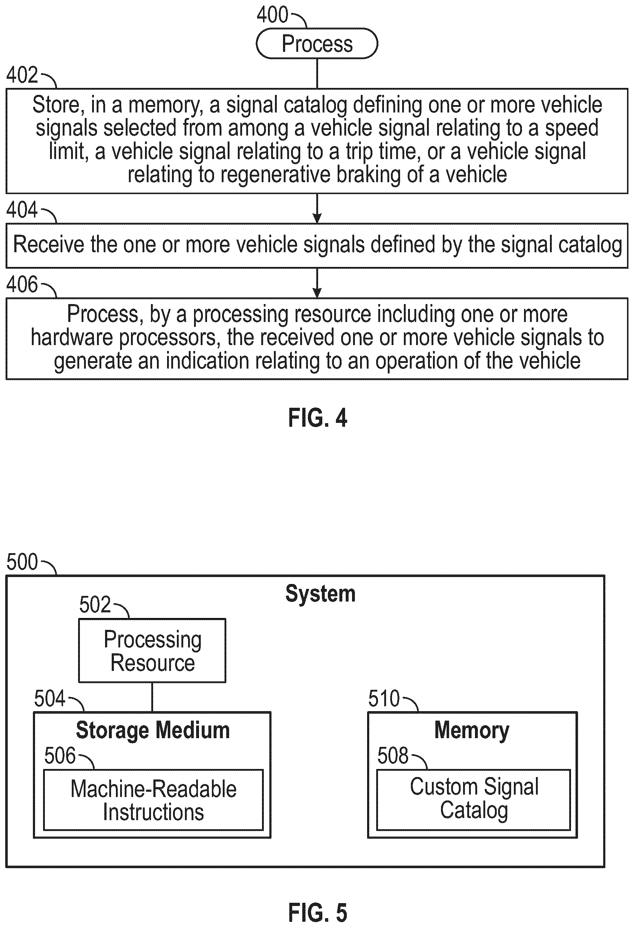

FIG. 4 is a flow diagram of a process 400, which may be performed by a vehicle (e.g., the vehicle 100) or by a computer system (e.g., the server 142) separate from a vehicle.

The process 400 includes storing (at 402), in a memory, a signal catalog defining one or more vehicle signals selected from among a vehicle signal relating to a speed limit, a vehicle signal relating to a trip time, or a vehicle signal relating to regenerative braking of a vehicle. The memory may be the memory 110 in the vehicle 100 of FIG. 1. Alternatively, the memory may be external of the vehicle 100, such as in the server 142.

The signal catalog may be the custom signal catalog 108 of FIG. 1. The process 400 includes receiving (at 404) the one or more vehicle signals defined by the signal catalog.

The process 400 includes processing (at 406), by a processing resource including one or more hardware processors, the received one or more vehicle signals to generate an indication relating to an operation of the vehicle. In some examples, the processing of the received one or more vehicle signals is performed using a machine learning model (e.g., 116 in FIG. 1).

In some examples, the indication is generated by the machine learning model and the indication includes a predicted range of the vehicle and/or a speed recommendation regarding a speed of the vehicle.

In some examples, the vehicle can control its speed using the speed recommendation, such as by the application program 118 of FIG. 1.

In some examples, the vehicle signal relating to the speed limit is based on an output of a driver assistance system (e.g., an ADAS) of the vehicle. The vehicle signal relating to the speed limit can be represented by a node in a driver assistance system branch (e.g., 306 in FIG. 3) of the signal catalog.

In some examples, the vehicle signal relating to the speed limit is based on an output of a navigation system of the vehicle. The vehicle signal relating to the speed limit can be represented by a node in a navigation system branch (e.g., 308 in FIG. 3) of the signal catalog.

In some examples, the vehicle signal relating to the trip time provides an indication of a trip time elapsed since a start of a current trip.

In some examples, the vehicle signal relating to the regenerative braking includes an indication (e.g., an IsActive indication) of whether the regenerative braking is active in the vehicle. In some examples, the vehicle signal relating to the regenerative braking includes an indication of a regenerative braking level to apply.

In some examples, the vehicle signal relating to the regenerative braking is represented by a node in an electric motor branch (e.g., 310 in FIG. 3) of the signal catalog.

In some examples, the signal catalog is based on an initial signal catalog and an update structure that adds the one or more vehicle signals that are not present in the initial signal catalog. The initial signal catalog may be a Vehicle Signal Specification (VSS) catalog, and the overlay data structure may include an overlay file.

FIG. 5 is a block diagram of a system 500 according to some examples. The system 500 may be part of a vehicle or may be separate from the vehicle. The system 500 includes a processing resource 502 including one or more hardware processors. The system 500 further includes a non-transitory machine-readable or computer-readable storage medium 504 that stores machine-readable instructions 506 that are executable by the processing resource 502.

The machine-readable instructions 506 can access a custom signal catalog 508 stored in a memory 510 of the system 500. The custom signal catalog 508 defines one or more vehicle signals selected from among a vehicle signal relating to a speed limit, a vehicle signal relating to a trip time, or a vehicle signal relating to regenerative braking of a vehicle.

The machine-readable instructions 506 can receive the one or more vehicle signals defined by the custom signal catalog 508, and can process the received one or more vehicle signals to generate an indication relating to an operation of the vehicle.

The storage medium 504 can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A method comprising:
storing, in a memory, a signal catalog defining one or more vehicle signals selected from among a vehicle signal relating to a speed limit, a vehicle signal relating to a trip time, or a vehicle signal relating to regenerative braking of a vehicle;
receiving the one or more vehicle signals defined by the signal catalog; and
processing, by a processing resource comprising a hardware processor in the vehicle, the received one or more vehicle signals to generate an indication relating to an operation of the vehicle.

2. The method of claim 1, wherein the processing of the received one or more vehicle signals is performed using a machine learning model; and optionally
wherein the machine learning model is executed in the vehicle.

3. The method of claim 2, wherein the indication is generated by the machine learning model and the indication comprises a predicted range of the vehicle.

4. The method of claim 2, wherein the indication is generated by the machine learning model and the indication comprises a speed recommendation regarding a speed of the vehicle; and
wherein, optionally, the method comprises:
controlling, by the vehicle, the speed of the vehicle according to the speed recommendation.

5. The method according to any one of claims 1 to 4, wherein the vehicle signal relating to the speed limit is based on an output of a driver assistance system of the vehicle.

6. The method of claim 5, wherein the vehicle signal relating to the speed limit based on the output of the driver assistance system is further based on a current roadway on which the vehicle is traveling; and/or
wherein the vehicle signal relating to the speed limit is represented by a node in a driver assistance system branch of the signal catalog.

7. The method according to any one of claims 1 to 6, wherein the vehicle signal relating to the speed limit is based on an output of a navigation system of the vehicle; and optionally
wherein the vehicle signal relating to the speed limit is represented by a node in a navigation system branch of the signal catalog.

8. The method according to any one of claims 1 to 7, wherein the vehicle signal relating to the trip time provides an indication of a trip time elapsed since a start of a current trip.

9. The method according to any one of claims 1 to 8, wherein the vehicle signal relating to the regenerative braking comprises an indication of whether the regenerative braking is active in the vehicle.

10. The method according to any one of claims 1 to 9, wherein the vehicle signal relating to the regenerative braking comprises an indication of a regenerative braking level to apply.

11. The method according to any one of claims 1 to 10, wherein the vehicle signal relating to the regenerative braking is represented by a node in an electric motor branch of the signal catalog.

12. The method according to any one of claims 1 to 11, wherein the signal catalog is based on an initial signal catalog and an update structure that adds the one or more vehicle signals that are not present in the initial signal catalog; and optionally
wherein the initial signal catalog comprises a Vehicle Signal Specification (VSS) catalog, and the update structure comprises an overlay file.

13. A vehicle comprising:
a memory to store a signal catalog defining one or more vehicle signals selected from among a vehicle signal relating to a speed limit, a vehicle signal relating to a trip time, or a vehicle signal relating to regenerative braking;
a plurality of sensors;
a processing resource; and
a non-transitory storage medium storing instructions executable by the processing resource to:
receive the one or more vehicle signals defined by the signal catalog, the one or more vehicle signals being based on measurement data from one or more sensors of the plurality of sensors, and
process the received one or more vehicle signals to generate an indication relating to an operation of the vehicle.

14. The vehicle of claim 13, wherein the instructions are part of a synthetic sensor in the vehicle.

15. A non-transitory machine-readable storage medium storing instructions that upon execution cause a system to:
access a signal catalog stored in a memory, the signal catalog defining one or more vehicle signals selected from among a vehicle signal relating to a speed limit, a vehicle signal relating to a trip time, or a vehicle signal relating to regenerative braking of a vehicle;
receive the one or more vehicle signals defined by the signal catalog; and
process the received one or more vehicle signals to generate an indication relating to an operation of the vehicle.
